# EUROPEAN PATENT APPLICATION

(11) **EP 0 926 370 A2**
(43) Date of publication of application: **30.06.1999**
(21) Application number: 98850193.8
(22) Date of filing: 14.12.1998
(51) Int. Cl.: F16C 35/073

(54) **Device for mounting a bearing on a shaft**

(30) Priority: 17.12.1997 US 992173
(71) Applicant: SKF MEKAN AB, S-641 21 Katrineholm (SE)
(72) Inventor: Östling, Sture, 641 25 Katrineholm (SE)
(74) Representative: Westman, P. Börje I.

(57) **Abstract**

A rolling bearing (2) assembly that is adapted to be mounted on a cylindrical shaft (1) with an interference fit includes a rolling bearing having an outer race ring and an inner race ring (6) provided with a bore having a taper, and a sleeve member (7) having a cylindrical bore and an outer envelope surface provided with a taper substantially corresponding to the taper of the bore in the inner race ring (6). A flange member (9) is mounted in an axially fixed manner in a groove (10) in the sleeve member (7) and is provided with one or more axially oriented through-holes for receiving a respective pushing member (11) which is adapted to be moved towards the inner race ring (6) to thereby cause the inner race ring (6) to be pushed up the tapered envelope surface of the sleeve member (7).

## Description

### FIELD OF THE INVENTION

The present invention generally relates to a rolling bearing assembly. More particularly, the present invention pertains to a bearing assembly comprising a self-aligning rolling bearing with a tapered bore that is adapted to be mounted on a shaft with an interference fit and subsequently dismounted.

### BACKGROUND OF THE INVENTION

Self-aligning bearings, such as double row ball bearings or double row spherical roller bearings, are typically mounted with an interference fit. The conventional mounting of such bearings is accomplished by pushing the bearing up on the sleeve and screwing the lock nut of the adapter sleeve onto the thread in the sleeve by means of a hook spanner. By turning the lock nut through a given tightening angle, the bearing is pressed up on the tapered seating of the sleeve to a desired interference fit. The result is a bearing having a residual clearance which can be found in tables.

Such mounting requires quite a high tightening force because the lock nut must be rotated about the circumference of the sleeve, thereby advancing against the bearing inner ring to be pushed up the sleeve at a speed decided by the turning of the nut and by the pitch of the sleeve thread. This makes the conventional mounting for achieving a predetermined interference fit and a predetermined residual bearing clearance difficult. Further, the conventional mounting requires skilled personnel in order to reliably and accurately achieve a correct mounting.

### SUMMARY OF THE INVENTION

In light of the foregoing, a need exists for a bearing assembly which makes it possible to achieve a predetermined interference fit and a predetermined residual bearing clearance with less difficulty than in other known types of bearing assemblies.

Further, a need exists for a bearing assembly which does not require the excessively skilled personnel in order to reliably and accurately achieve a correct mounting.

The present invention provides a bearing assembly designed so that the mounting of the rolling bearing can be achieved with a high degree of accuracy and with a lower required force for driving the race ring up the sleeve, and so that dismounting can be accomplished at a substantially lower dismounting force as compared to other known assemblies.

In accordance with the present invention, a rolling bearing assembly that is adapted to be mounted on a cylindrical shaft with an interference fit includes a rolling bearing having an outer race ring and an inner race ring provided with a tapered bore, a sleeve member having a cylindrical bore and an outer envelope surface provided with a taper substantially corresponding to the taper of the bore in the inner race ring, and a flange member mounted in an axially fixed manner in a groove in the sleeve member. The flange member is located adjacent one end face of the inner race ring and has a plurality of substantially equally spaced apart threaded through-holes each having an axis that is substantially parallel to the axis of the bore in the inner race ring bore. A threaded screw is received in each of the threaded through holes in the flange member, with the threaded screws being operable to move axially towards the inner race ring and apply a force to the inner race ring which causes the inner race ring to be pushed up the tapered envelope surface of the sleeve member.

According to another aspect of the invention, a rolling bearing assembly that is adapted to be mounted on a cylindrical shaft with an interference fit includes a rolling bearing having an outer race ring and an inner race ring provided with a tapered bore, a sleeve member having a cylindrical bore and an outer envelope surface provided with a taper substantially corresponding to the taper of the bore in the inner race ring, and a flange member mounted in an axially fixed manner in a groove in the sleeve member. The flange member has at least one axially oriented through hole for receiving a pushing member which is adapted to be moved towards the inner race ring to thereby cause the inner race ring to be pushed up the envelope surface of the sleeve member.

Another aspect of the invention involves a method of mounting a rolling bearing on a shaft and moving the rolling bearing along the shaft. The method includes positioning a rolling bearing on a shaft with a sleeve member interposed between the inner race ring of the rolling bearing and the outer peripheral surface of the shaft, and with the inner race ring having a tapered bore and the sleeve having an outer enveloped surface provided with a taper that substantially corresponds to the taper of the bore of the inner race ring. A plurality of pushing members which may be in the form of set screws are then operated to cause the pushing members to move axially towards the inner race ring and apply an axial force to the inner race ring which forces the taper surface of the bore in the inner race ring to move along the tapered envelope surface of the sleeve member.

### BRIEF DESCRIPTION OF THE DRAWING FIGURES

The foregoing and additional features and characteristics associated with the present invention will become more apparent from the following detailed description considered with reference to the accompanying drawing figures in which like elements are designated by like reference numerals and wherein:
Fig. 1 is a cross-sectional view of a double row spherical roller bearing mounted on a shaft by means of a conventional method and device;
Fig. 2 is a cross-sectional view of a double row spherical roller bearing assembly mounted on a shaft by way of a device in accordance with the present invention;
Fig. 3 is an end view of a roller bearing assembly according to the present invention; and
Fig. 4 is a cross-sectional view of a roller bearing assembly according to the present invention illustrating devices provided at either end of the rolling bearing for mounting and dismounting the rolling bearing on the shaft.

### DETAILED DESCRIPTION OF THE INVENTION

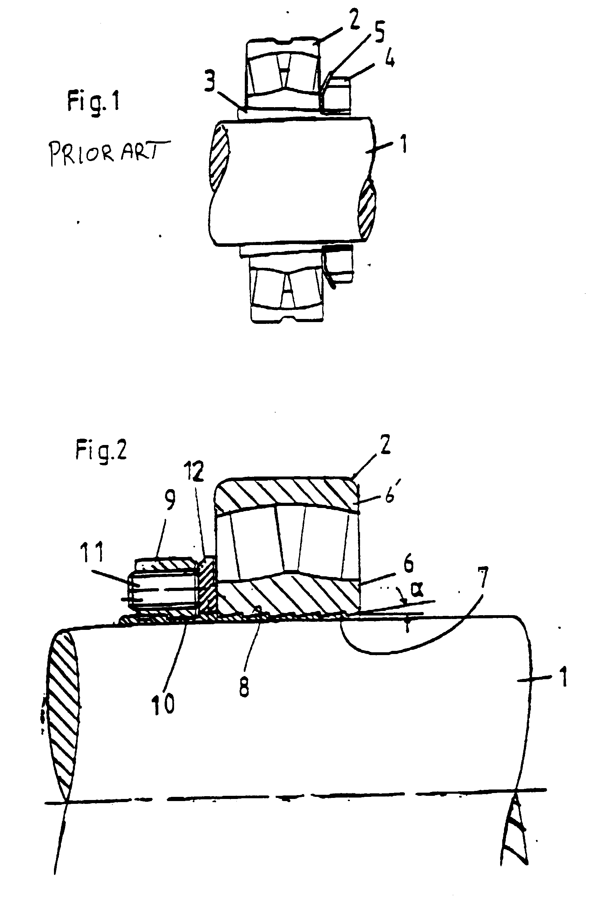

To facilitate a more fuller appreciation of the present invention, reference is initially made to Fig. 1 which shows by way of a cross-sectional view a shaft 1 on which is mounted a double row spherical roller bearing 2 in accordance with known constructions such as described above. The shaft 1 is cylindrical and the bearing 2 has a tapered bore. The mounting of the bearing on the shaft is effected with the aid of a conventional adapter sleeve 3, having a cylindrical bore and a tapering envelope surface. The adapter sleeve 3 also has a nut 4 with a locking washer 5. The nut 4 can be moved axially on the sleeve 3 by cooperating with an external thread provided on the end portion of the sleeve. The nut is thus able to push up the bearing on the taper sleeve portion by tightening of the nut 4 on the adapter sleeve. This mounting, and also a subsequent dismounting can be accomplished in a rather simple manner, but the force for turning the nut, as stated in the introductory part of the application, is rather high thereby making it difficult to obtain exactly the desired residual clearance in the bearing.

Fig. 2 shows, on a slightly enlarged scale, a cross-sectional view of a bearing assembly in accordance with the present invention, with only the upper half of the shaft 1 and the bearing 2 being illustrated. According to the present invention, the bearing 2 includes an inner race ring 6 and an outer race ring 6'. A sleeve 7 is positioned between the inner surface of the bore in the inner bearing 6 and the outer surface of the shaft 1. The bore of the inner race ring 6 of the bearing 2 and the outer envelope surface of the sleeve 7 are both provided with complementary saw-tooth shaped longitudinal profiles 8 that define complementary tapered surfaces for ascertaining a small radial extension of the clamping surfaces. The sleeve 7 is preferably provided with a longitudinally extending slot extending over its entire axial extent for ascertaining good radial deformability.

The sleeve 7 is further provided with a flange member 9. In the embodiment shown, the flange member 9 is mounted in a groove 10 in the sleeve 7 so that the flange member 9 is axially arrested or fixed relative to the sleeve 7. The flange member 9 has a plurality of evenly spaced apart and axially extending threaded through-holes which are each adapted to receive a respective pushing member in the form of a set screw 11. The front end of each set screw 11 is directed towards the bearing 2 and acts when tightened, preferably via the intermediary of a thrust washer 12, against the side face of the inner ring 6 of the bearing. This tightening urges the inner race ring 6 of the bearing to move axially relative to the taper sleeve 7, thereby entering or moving up on the tapered surface of the sleeve 7 and increasing the pretension of the bearing. The axially movable thrust washer 12 is positioned between the end face of the inner race ring 6 and the facing end of the flange member 9 that faces the bearing 2 and is designed to evenly distribute the pushing up force to the inner race ring 6.

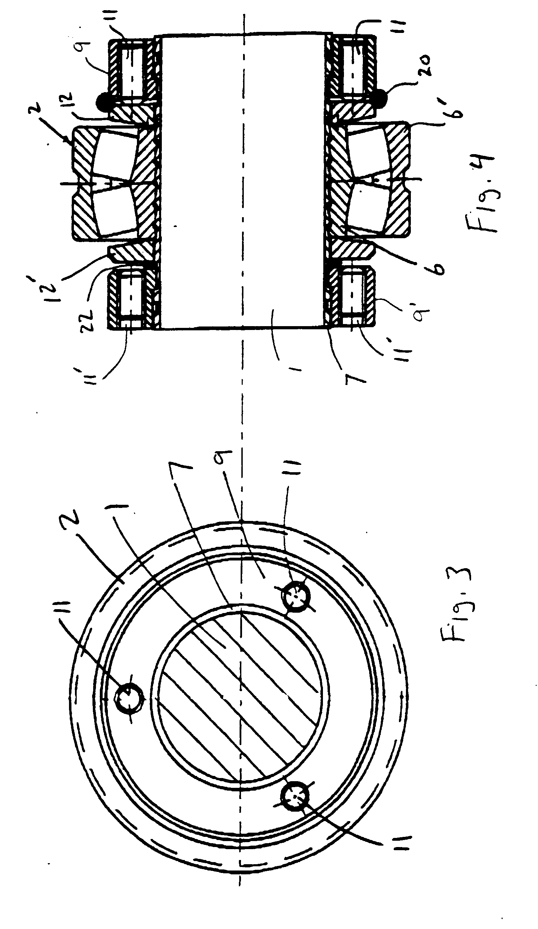

The number of set screws used in the flange member 7 shown in Fig. 2 is preferably at least two, with such screws being generally equally spaced apart. However, to obtain an even and uniform pressure against the inner race ring, it is preferable to use three or four such set screws 11 evenly distributed or spaced around the flange member. Fig. 3 illustrates a set of three screws 11 each threadably received in a respective through hole in the flange member 9 and equally spaced apart from one another.

A major advantage associated with the present invention is that the required axial driving up force for correcting the inner radial clearance in the bearing is achieved by the choice of an appropriate number of the set screws 11 used in relation to the size of the bearing to be mounted and then tightening these set screws to a maximum. It is thus not necessary to control the clearance in the typical manner, e.g. with aid of a measuring device. Furthermore such measuring devices cannot be used with scaled bearings where it is not possible to gain access to the interior of the bearing.

The taper of a conventional adapter sleeve is most often 1:12, and the main reason for this is that it is geometrically difficult to design the adaptor sleeve with a steeper taper angle. A steeper taper angle is however preferable for the following reasons:
1) The influence of the friction coefficient is much lower, which means that the precision in the above mentioned mounting is much higher, as the mounting force = tgα + *µ*, where α is the taper angle and *µ* is the friction coefficient.
2) The dismounting force required is much lower, and
3) The locking is much quicker and the travelling length is shorter.

It has been found that a taper of between about 1:3 and 1:3.5, which is close to self-braking, gives a good mounting and dismounting result with a considerably reduced force required for driving up. The taper of the bore in the inner race ring 6 and the taper of the outer envelope surface of the sleeve member 7 in accordance with the present invention is between 1:3 and 1:3.5.

By virtue of the present invention, involving the use of the tapered sleeve 7 and the flange member 9 with set screws 11 that press against the bearing inner ring 6, the driving up force when using a sleeve having a taper of 1:3 will require a torque which is only about one tenth of that which must be used for a nut of the type illustrated in the prior art according to Fig. 1.

The bearing assembly can also be designed for easy dismounting of the bearing, in which case a similar flange member as that shown in Fig. 2 can be arranged on a portion of the sleeve projecting out from the opposite side face of the bearing. Fig. 4 illustrates such an arrangement and shows a second flange member 9' mounted in a groove in the sleeve 7 so that the second flange member 9' is axially arrested or fixed relative to the sleeve 7. The second flange member 9' is provided with threaded through holes that each receive a respective set screw 11'. This second set of set screws 11' is arranged to act, preferably via the intermediary of a second thrust washer 12', on the opposite side face of the bearing. When tightened, these set screws 11' urge the inner race ring 6 of the bearing to move in the opposite direction with respect to the sleeve 7, thereby loosening the grip between the bearing inner ring and the sleeve. The force required for such dismounting would be only about one fourteenth of that required for withdrawal with a conventional withdrawal sleeve of the well known type. It is to be understood that this dismounting can be effected in spite of the saw-tooth shaped longitudinal profiles 8. The saw-tooth shaped longitudinal profiles 8 shown in Fig. 4 are enlarged for purposes of illustration and, in practice, do not interfere with the dismounting operation described above.

Fig. 4 also illustrates that a seal element 20 can be positioned between the flange member 9 and the thrust washer 12 adjacent the radially outer region of the flange member 9 and the thrust washer 12. A seal element 22 can also be positioned between the second flange member 9' and the second thrust washer 12' adjacent the radially inner region of the second flange member 9' and the second thrust washer 12'. These seal elements 20, 22 can be used to provide sealing characteristics depending upon the environment in which the rolling bearing is employed. Also, the seal element 20 shown in fig. 4 can be used in connection with the arrangement depicted in Fig. 2.

In accordance with the present invention, the mounting of the rolling bearing 2 on the shaft 1 can be effected by positioning the rolling bearing 2 on the shaft 7 with the sleeve member 7 being interposed between the inner race ring 6 of the rolling bearing 2 and an outer peripheral surface of the shaft 1. Through operation (i.e., turning) of the pushing members or set screws 11, the pushing members move axially towards the inner race ring 6 and apply an axial force to the inner race ring 6 which forces the taper surface of the bore in the inner race ring 6 to move up the tapered envelope surface of the sleeve member 7 to thereby produce an interference fit. Similarly, through operation or turning of the pushing members 11', the pushing members 11' move axially towards the inner race ring 6 and apply an axial force to the inner race ring 6 which forces the taper surface of the bore in the inner race ring 6 to move down the tapered envelope surface of the sleeve member 7 to thereby effect dismounting.

The principles, preferred embodiments and modes of operation of the present invention have been described in the foregoing specification. However, the invention which is intended to be protected is not to be construed as limited to the particular embodiments described. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the invention be embraced thereby.

## Claims

1. A rolling bearing assembly adapted to be mounted on a cylindrical shaft with an interference fit, comprising:
a rolling bearing having an outer race ring and an inner race ring, the inner race ring being provided with a bore having a taper, the bore having an axis;
a sleeve member having a cylindrical bore and an outer envelope surface provided with a taper substantially corresponding to the taper of the bore in the inner race ring;
a flange member mounted in an axially fixed manner in a groove in the sleeve member, said flange member being located adjacent one end face of the inner race ring, said flange member having a plurality of substantially equally spaced apart threaded through holes each having an axis that is substantially parallel to the axis of the bore in the inner race ring bore; and
a plurality of threaded screws each received in one of the threaded through holes in the flange member, the threaded screws being operable to move axially towards the inner race ring and apply a force to the inner race ring which causes the inner race ring to be pushed along the tapered envelope surface of the sleeve member.

2. A rolling bearing assembly as claimed in Claim 1, including an axially movable thrust washer positioned between said end face of the inner race ring and a surface of the flange member that faces the inner race ring for evenly distributing a pushing up force to the inner race ring.

3. A rolling bearing assembly as claimed in Claim 1, wherein the taper of the bore in the inner race ring and the taper of the outer envelope surface of the sleeve member is between 1:3 and 1:3.5.

4. A rolling bearing assembly as claimed in Claim 1, wherein said flange member is a first flange member, and including a second flange member mounted in an axially fixed manner on the sleeve member, said second flange member being located adjacent an end face of the inner race ring opposite said one end face, said second flange member having a plurality of substantially equally spaced apart threaded through holes each having an axis that is substantially parallel to the axis of the bore in the inner race ring, and a set screw positioned in each of said through holes in said second flange member.

5. A rolling bearing assembly as claimed in Claim 4, including an axially movable thrust washer positioned between said inner race ring and a surface of the second flange member that faces the inner race ring for evenly distributing a pushing up force to the inner race ring.

6. A rolling bearing assembly adapted to be mounted on a cylindrical shaft with an interference fit, comprising:
a rolling bearing having an outer race ring and an inner race ring, the inner race ring being provided with a bore having a taper;
a sleeve member having a cylindrical bore and an outer envelope surface provided with a taper substantially corresponding to the taper of the bore in the inner race ring;
a flange member mounted in an axially fixed manner in a groove in the sleeve member, said flange member having at least one axially oriented through-hole for receiving a pushing member which is adapted to be moved towards the inner race ring to thereby cause the inner race ring to be pushed along the envelope surface of the sleeve member.

7. A rolling bearing assembly as claimed in Claim 6, wherein the through-hole in the flange member is threaded, and the pushing member for moving the inner race ring is a set screw.

8. A rolling bearing assembly as claimed in Claim 6, including an axially movable thrust washer positioned between a side face of the inner race ring and a facing end of the flange member that faces the bearing for evenly distributing a pushing up force to the inner race ring.

9. A rolling bearing assembly as claimed in Claim 6, wherein the flange member includes at least two axially extending and equally spaced apart through holes, each of which receives a respective pushing member.

10. A rolling bearing assembly as claimed in Claim 9, wherein the through-holes in the flange member are threaded, and the pushing member received in each through hole for moving the inner race ring is a set screw.

11. A rolling bearing assembly as claimed in Claim 9, including an axially movable thrust washer positioned between a side face of the inner race ring and a facing end of the flange member that faces the bearing for evenly distributing a pushing up force to the inner race ring.

12. A rolling bearing assembly as claimed in Claim 6, wherein the taper of the bore in the inner race ring and the taper of the outer envelope surface of the sleeve member is between 1:3 and 1:3.5.

13. A rolling bearing assembly as claimed in Claim 6, wherein said flange member is a first flange member, and including a second flange member mounted in an axially fixed manner on the sleeve member, said second flange member being located on an end of the inner race ring opposite said first flange member, said second flange member having a plurality of substantially equally spaced apart threaded through holes each having an axis that is substantially parallel to the axis of the bore in the inner race ring bore, and a set screw positioned in each of said through holes in said second flange member.

14. A rolling bearing assembly as claimed in Claim 13, including an axially movable thrust washer positioned between said inner race ring and a surface of the second flange member that faces the inner race ring for evenly distributing a pushing up force to the inner race ring.

15. A method of mounting a rolling bearing on a shaft and moving the rolling bearing along the shaft, comprising:
positioning a rolling bearing on a shaft with a sleeve member interposed between an inner race ring of the rolling bearing and an outer peripheral surface of the shaft, the inner race ring having a tapered bore and the sleeve having an outer enveloped surface provided with a taper that substantially corresponds to the taper of the bore of the inner race ring; and
operating a plurality of pushing members positioned adjacent one end face of the inner race ring to cause said pushing members to move axially towards said inner race ring and apply an axial force to the inner race ring which forces the taper surface of the bore in the inner race ring to move along the tapered envelope surface of the sleeve member.

16. A method as claimed in Claim 15, including a flange member mounted on the sleeve member adjacent said one end face of the inner race ring, said pushing members including threaded screws threadably received in through holes in the flange member, said step of operating said pushing members including rotating the threaded screws.

17. A method as claimed in Claim 15, including operating a plurality of pushing members positioned adjacent an end face of the inner race ring that is opposite said one end face to cause said pushing members to move axially towards said inner race ring and apply an axial force to the inner race ring which forces the taper surface of the bore in the inner race ring to move down the tapered envelope surface of the sleeve member to effect dismounting of the rolling bearing.

18. A method as claimed in Claim 15, wherein said step of operating said pushing member forces the taper surface of the bore in the inner race ring to move up the tapered envelope surface of the sleeve member to produce an interference fit.

19. A method as claimed in Claim 15, wherein said step of operating said pushing member forces the taper surface of the bore in the inner race ring to move down the tapered envelope surface of the sleeve member to effect dismounting of the rolling bearing.
